# EUROPEAN PATENT SPECIFICATION

(11) **EP 2 471 367 B1**
(45) Date of publication and mention of the grant of the patent: **05.03.2014**
(21) Application number: 11193023.6
(22) Date of filing: 12.12.2011
(51) Int. Cl.: A01N 43/80, A01N 25/02, C08K 5/10, C08K 5/46, A01P 1/00

(54) **Low temperature stable concentrates of isothiazolinones in plasticizers selected from benzoate esters**
Bei niedriger Temperatur stabile Isothiazolinone-Konzentrate in Weichmachern ausgewählt aus Benzoat-Estrern
Concentrés d'isothiazolinone stables à basse température dans des plastifiants sélectionnés parmi les esters de benzoate

(30) Priority: 29.12.2010 EP 10290680
(43) Date of publication of application: 04.07.2012
(73) Proprietor: Rohm and Haas Company, Philadelphia, Pennsylvania 19106-2399 (US)
(72) Inventor: Hamel, Roger, G., Newtown, PA 18940 (US); Levy, Richard, 06560 Valbonne (FR); Koehler, Thomas, 8280 Kreuzlingen TG (CH)
(74) Representative: Buckley, Guy Julian

(56) References cited:
- EP-A1- 0 910 953
- US-A- 5 498 344
- US-A- 5 554 635

## Description

This invention relates to liquid concentrates of 4,5-dichloro-2-(n-octyl-4-isothiazolin-3-one) ("DCOIT") which are stable to crystallization or freezing at sub-freezing temperatures.

It is well known to add biocides to thermoplastic resin compositions (i.e. plastics), caulks, sealants, and other articles in order to protect such articles against microbial degradation. For processing reasons, it is known to provide biocides as concentrates, such as liquid concentrates. Although a number of biocides have been suggested, isothiazolones, particularly DCOIT, have shown promise in such applications, especially those involving outdoor weathering of the article. However, at room temperature, many isothiazolones, including DCOIT, are in solid form and, therefore, are difficult to handle. These isothiazolones are more easily handled if dissolved in a liquid carrier, particularly a plasticizer which serves its normal plasticizing function in the end-use composition. However, even though stable at room temperature (i.e., 20 - 25ºC) plasticizer solutions of isothiazolones, particularly DCOIT, are known to freeze when the temperature of the solution becomes cold, as might be encountered during shipping and storage in winter climates. This is highly undesirable as a manufacturer who might receive a frozen concentrate would not only have to thaw the concentrate, but also take steps to ensure that the isothiazolone is fully re-dissolved and that the concentrate is homogeneous.

European Patent 0 910 953 discusses this freezing problem and discloses that for solution concentrates comprising between 4 and 25 weight percent of an isothiazolone compound, between 25 and 88 weight percent of one or more plasticizers in which the isothiazolone compound is soluble, and between 8 and 50 weight percent of benzyl alcohol will be stabile against crystallization and/or freezing under sub-freezing conditions. Preferably the concentrate contains at least 10 weight percent DCOIT and at least 15 weight percent benzyl alcohol and, under certain circumstances, preferably at least 15 weight percent DCOIT and at least 40 weight percent benzyl alcohol. DCOIT is the preferred compound because it exhibits improved stability (i.e., weatherability) relative to other isothiazolone compounds, particularly in outdoor conditions. US Patent No. 5,554,635 discloses concentrates of isothiazolones and plasticizers which are stabilized against crystallization or freezing at sub-zero temperatures by the addition of at least 4 weight percent of the cobiocide triclosan (2,4,4'-trichloro-2'-hydroxydiphenyl ether).

The present invention is as set out in the accompanying claims.

We have discovered that in combination with a certain limited class of plasticizers, isothiazolones, preferably DCOIT, do not require the presence of the cosolvent, benzyl alcohol or triclosan for stability. Our invention, therefore is a liquid concentrate, comprising a homogeneous solution of 4 to 40 weight percent isothiazolone, selected from ,5-dichloro-2-(n-octyl-4-isothiazolin-3-one) ("DCOIT"), n-octyl-4-isothiazolin-3-one and mixtures thereof, and 60 to 96 weight percent benzoate ester plasticizer ("benzoate" or "benzoates"), wherein the concentrate is substantially free of cosolvent and triclosan.

For purposes of this invention, cosolvent means an organic solvent that is capable of dissolving and/or is soluble in the isothiazolone and the benzoate ester plasticizer including, but not limited to, benzyl alcohol and monoalkylphenols. The term "substantially free" means less than 4 weight percent, preferably less than 3 weight percent, preferably less than 2 weight percent, preferably less than 1 weight percent, and preferably 0 weight percent. The term "stable to crystallization at freezing or freezing at sub-freezing temperatures" means that at temperatures of 0°C or less the composition remains clear or if the composition becomes turbid at temperatures of 0°C or less it becomes clear when heated to room temperature.

Isothiazolones useful in this invention are n-octyl-4-isothiazolin-3-one and DCOIT, preferred is DCOIT. The compositions comprise preferably 30 weight percent or less isothiazolone, more preferably 20 weight percent or less isothiazolone, more preferably 15 weight percent or less isothiazolone, preferably 12 weight percent or less isothiazolone. The compositions comprise preferably 5 weight percent or more isothiazolone, more preferably 8 weight percent or more isothiazolone.

The liquid concentrate of the present invention is substantially free of cosolvent.

The liquid concentrate of the present invention is substantially free of benzyl alcohol.

The liquid concentrate of the present invention is substantially free of triclosan.

Preferred benzoate esters are (C₄ - C₂₂) alkyl benzoates, glycol benzoates, and mixtures thereof. Most preferred are glycol benzoates and their mixtures. Many of these benzoate esters are available from Eastman Chemical Company under the tradename "Benzoflex™".

### EXAMPLES

Table 1 lists the compositions of benzoate ester plasticizers used in the examples. In each test, 12.5 g of DCOIT was added to 112.5 g of the benzoate ester plasticizer in a beaker, heated to 54°C and held 1-2 minutes after all the DCOIT appeared to be dissolved. The compositions were mixed throughout the heating process. Each composition was transferred to a clear glass vial for 30-day solution stability testing at -10 °C and 60 °C. Table 2 lists the observations after 30 days storage of the solutions.

**Table 1**

| Plasticizer | % by weight | Benzoate Ester | |
|---|---|---|---|
| Benzoflex™ 2088 | 50 | Diethylene glycol dibenzoate | |
| | 25 | Dipropylene glycol dibenzoate | |
| | 25 | Triethylene glycol dibenzoate | |
| Benzoflex™ 2-45 | 89.9 | Diethylene glycol dibenzoate | |
| | 5.85 | Diethylene glycol monobenzoate | |
| | 1.5 | Dipropylene glycol dibenzoate | |
| Benzoflex™ 9-8 SG | 93.0-99.8 | Dipropylene glycol dibenzoate | |
| | 0.1-5.0 | Dipropylene glycol monobenzoate | |
| Benzoflex™ 131 | 98-100 | Isodecyl Benzoate | |
| Benzoflex™ 284 | 92-96 | Propylene glycol dibenzoate | |
| | 1-2 | Propylene glycol monobenzoate | |
| | 2-3 | Dipropylene glycol dibenzoate | |
| Benzoflex™ P-200 | 99.8-100 | Polyethylene glycol Dibenzoate | |
| Benzoflex™ 354 | 99.8-100 | 2,2,4-trimethyl-1,3-pentanediol dibenzoate | |
| Benzoflex™ 9-88 | 89.4 | Dipropylene glycol dibenzoate | |
| | 4.98 | Dipropylene glycol monobenzoate | |
| | 2.35 | Propenyl Propyl Benzoate | |
| | 2.29 | Propylene glycol dibenzoate | |
| | 0.28 | Propylene glycol monobenzoate | |

**Table 2**

| Observations of 10 % DCOIT in Benzoate Esters after 30 days | | |
|---|---|---|
| | -10 °C | 60 °C |
| Benzoflex 2088 | Clear | Stable |
| Benzoflex 2-45 | Frozen, thawed clear | Stable |
| Benzoflex 9-88 SG | Clear | Stable |
| Benzoflex 131 | Clear | Stable |
| Benzoflex 284 | Clear | Stable |
| Benzoflex P-200 | Clear | Stable |
| Benzoflex-354 | Clear | Stable |
| Benzoflex 9-88 | Clear | Stable |

### Example 2

Dibenzoates from Sigma Aldrich were purchased that contain the same dibenzoates as the corresponding Benzoflex™ materials. Solutions of 10% DCOIT in the benzoate esters were prepared in Erlenmeyer flasks by adding solid DCOIT to the benzoate esters under stirring at room temperature and warming to 50°C. The resulting faint yellow solutions were transferred to snap cap flasks and stored at the given temperatures. Crystal formation in low temperature environments (cloud point) were measured according to the test method of DIN ISO 935. The solutions were also evaluated for elevated temperature stability (55ºC.). Table 3 lists the stability observations for the tested solutions.

**Table 3**

| | -30 °C | 55 °C |
|---|---|---|
| Propane diol dibenzoate (replacement for Benzoflex™ 284) | Start to increased turbidity (crystal formation) | stable |
| Dipropylene glycol dibenzoate (replacement for Benzoflex™ 9-88 SG) | Start to increased turbidity (crystal formation) | stable |

## Claims

1. A liquid concentrate, comprising a homogeneous solution of:
a. 4 to 40 weight percent isothiazolone selected from 4,5-dichloro-2-(n-octyl-4-isothiazolin-3-one) ("DCOIT"), n-octyl-4-isothiazolin-3-one and mixtures thereof; and
b. 60 to 96 weight percent benzoate ester plasticizer;
wherein the concentrate comprises:
i. less than 4 weight percent of an organic solvent that is capable of dissolving and/or is soluble in the isothiazolone and benzoate ester plasticizer; and
ii. less than 4 weight percent triclosan.

2. The liquid concentrate of claim 1, wherein the isothiazolone is DCOIT.

3. The liquid concentrate of claim 1 or claim 2, comprising 30 weight percent or less isothiazolone.

4. The liquid concentrate of claim 3, comprising 15 weight percent or less isothiazolone.

5. The liquid concentrate of any of the preceding claims, comprising more than 8 weight percent isothiazolone.

6. The liquid concentrate of any of the preceding claims, wherein the benzoate ester plasticizer is selected from the group consisting of (C₄ - C₂₂) alkyl benzoates, glycol benzoates, and mixtures thereof.

7. The liquid concentrate of claim 6, wherein the benzoate ester plasticizer is a mixture of glycol benzoates.

8. The liquid concentrate of claim 1, wherein the isothiazolone is a mixture of isothiazolones.

9. The liquid concentrate of any of the preceding claims, comprising less than 2 weight percent of said organic solvent.

10. The liquid concentrate of claim 9, comprising 0 weight percent of said organic solvent.

11. The liquid concentrate of any of the preceding claims, comprising less than 2 weight percent triclosan.

12. The liquid concentrate of claim 11, comprising 0 weight percent triclosan.

13. The liquid concentrate of claim 1, comprising less than 2 weight percent benzyl alcohol.

14. The liquid concentrate of claim 13, comprising 0 weight percent benzyl alcohol.

## Patentansprüche

1. Ein Flüssigkonzentrat, das eine homogene Lösung aus Folgendem beinhaltet:
a. 4 bis 40 Gewichtsprozent Isothiazolon, ausgewählt aus 4,5-Dichlor-2-(n-octyl-4-isothiazolin-3-on) ("DCOIT"), n-Octyl-4-isothiazolin-3-on und Mischungen davon; und
b. 60 bis 96 Gewichtsprozent Benzoatesterweichmacher;
wobei das Konzentrat Folgendes beinhaltet:
i. weniger als 4 Gewichtsprozent eines organischen Lösungsmittels, das in der Lage ist, das Isothiazolon und den Benzoatesterweichmacher aufzulösen, und/oder das in dem Isothiazolon und Benzoatesterweichmacher löslich ist; und
ii. weniger als 4 Gewichtsprozent Triclosan.

2. Flüssigkonzentrat gemäß Anspruch 1, wobei das Isothiazolon DCOIT ist.

3. Flüssigkonzentrat gemäß Anspruch 1 oder Anspruch 2, das 30 Gewichtsprozent oder weniger Isothiazolon beinhaltet.

4. Flüssigkonzentrat gemäß Anspruch 3, das 15 Gewichtsprozent oder weniger Isothiazolon beinhaltet.

5. Flüssigkonzentrat gemäß einem der vorhergehenden Ansprüche, das mehr als 8 Gewichtsprozent Isothiazolon beinhaltet.

6. Flüssigkonzentrat gemäß einem der vorhergehenden Ansprüche, wobei der Benzoatesterweichmacher aus der Gruppe ausgewählt ist, die aus Folgendem besteht: (C₄-C₂₂)Alkylbenzoaten, Glykolbenzoaten und Mischungen davon.

7. Flüssigkonzentrat gemäß Anspruch 6, wobei der Benzoatesterweichmacher eine Mischung von Glykolbenzoaten ist.

8. Flüssigkonzentrat gemäß Anspruch 1, wobei das Isothiazolon eine Mischung von Isothiazolonen ist.

9. Flüssigkonzentrat gemäß einem der vorhergehenden Ansprüche, das weniger als 2 Gewichtsprozent des organischen Lösungsmittels beinhaltet.

10. Flüssigkonzentrat gemäß Anspruch 9, das 0 Gewichtsprozent des organischen Lösungsmittels beinhaltet.

11. Flüssigkonzentrat gemäß einem der vorhergehenden Ansprüche, das weniger als 2 Gewichtsprozent Triclosan beinhaltet.

12. Flüssigkonzentrat gemäß Anspruch 11, das 0 Gewichtsprozent Triclosan beinhaltet.

13. Flüssigkonzentrat gemäß Anspruch 1, das weniger als 2 Gewichtsprozent Benzylalkohol beinhaltet.

14. Flüssigkonzentrat gemäß Anspruch 13, das 0 Gewichtsprozent Benzylalkohol beinhaltet.

## Revendications

1. Un concentré liquide, comprenant une solution homogène de :
a. 4 à 40 pour cent en poids d'isothiazolone sélectionnée parmi la 4,5-dichloro-2-(n-octyl-4-isothiazolin-3-one) (« DCOIT »), la n-octyle-4-isothiazolin-3-one et des mélanges de celles-ci ; et
b. 60 à 96 pour cent en poids de plastifiant à base d'ester benzoate ;
le concentré comprenant :
i. moins de 4 pour cent en poids d'un solvant organique qui est capable de se dissoudre et/ou est soluble dans l'isothiazolone et le plastifiant à base d'ester benzoate ; et
ii. moins de 4 pour cent en poids de triclosane.

2. Le concentré liquide de la revendication 1, dans lequel l'isothiazolone est de la DCOIT.

3. Le concentré liquide de la revendication 1 ou la revendication 2, comprenant 30 pour cent en poids ou moins d'isothiazolone.

4. Le concentré liquide de la revendication 3, comprenant 15 pour cent en poids ou moins d'isothiazolone.

5. Le concentré liquide de n'importe lesquelles des revendications précédentes, comprenant plus de 8 pour cent en poids d'isothiazolone.

6. Le concentré liquide de n'importe lesquelles des revendications précédentes, dans lequel le plastifiant à base d'ester benzoate est sélectionné dans le groupe consistant en des benzoates d'alkyle en (C₄ à C₂₂), des benzoates de glycol, et des mélanges de ceux-ci.

7. Le concentré liquide de la revendication 6, dans lequel le plastifiant à base d'ester benzoate est un mélange de benzoates de glycol.

8. Le concentré liquide de la revendication 1, dans lequel l'isothiazolone est un mélange d'isothiazolones.

9. Le concentré liquide de n'importe lesquelles des revendications précédentes, comprenant moins de 2 pour cent en poids dudit solvant organique.

10. Le concentré liquide de la revendication 9, comprenant 0 pour cent en poids dudit solvant organique.

11. Le concentré liquide de n'importe lesquelles des revendications précédentes, comprenant moins de 2 pour cent en poids de triclosane.

12. Le concentré liquide de la revendication 11, comprenant 0 pour cent en poids de triclosane.

13. Le concentré liquide de la revendication 1, comprenant moins de 2 pour cent en poids d'alcool benzylique.

14. Le concentré liquide de la revendication 13, comprenant 0 pour cent en poids d'alcool benzylique.
